Europäisches Patentamt

European Patent Office

Office européen des brevets

(11) Publication number: **0 151 538**
**B1**

## (12) EUROPEAN PATENT SPECIFICATION

(45) Date of publication of patent specification: **14.11.90**

(21) Application number: **85300643.5**

(22) Date of filing: **30.01.85**

(51) Int. Cl.⁵: **G 11 B 27/02, H 04 N 5/783, H 04 N 5/95**

(54) Video tape recorder.

(30) Priority: **31.01.84 JP 15458/84**

(43) Date of publication of application:
**14.08.85 Bulletin 85/33**

(45) Publication of the grant of the patent:
**14.11.90 Bulletin 90/46**

(84) Designated Contracting States:
**AT DE FR GB NL**

(56) References cited:
**GB-A-2 098 021**
**US-A-4 195 317**
**US-A-4 327 382**

**RUNDFUNKTECHNISCHE MITTEILUNGEN, Heft 3, Jahrgang 28 (1984), RTM Hamburg P. JANKER "Die lösung de PAL-8ER-SEQUENZ-PROBLEMATIK beim MOSAIC-System", pages 112-120**

(73) Proprietor: **SONY CORPORATION**
**7-35 Kitashinagawa 6-Chome Shinagawa-ku Tokyo 141 (JP)**

(72) Inventor: **Aoki, Shinji**
**c/o Sony Corporation 7-35 Kitashinagawa 6-chome**
**Shinagawa-ku Tokyo (JP)**

(74) Representative: **Ayers, Martyn Lewis Stanley et al**
**J.A. KEMP & CO. 14 South Square Gray's Inn London, WC1R 5EU (GB)**

Courier Press, Leamington Spa, England.

## Description

This invention relates to apparatus for recording and/or reproducing a video signal and in particular, is directed to such an apparatus that the video signal is recorded and/or reproduced with different tape speed from normal one.

Conventionally, it is required in a video tape recorder (hereinafter referred to as a VTR) to preview the video signal reproduced from a magnetic tape and an input video signal to be newly recorded. Accordingly, the VTR is provided with a switch, by which the reproduced video signal and the input video signal are switched and alternatively supplied to a monitor. When the magnetic tape is transported with the same speed as that in recording, the time axis of the input video signal substantially coincides with that of the reproduced video signal. As a result, an output video signal which comprises a mixture of the reproduced video signal and the input video signal will be displayed on the screen of a television receiver without disturbance.

On the other hand, if the magnetic tape is transported at a different tape speed from the recording tape speed, the picture displayed by the television receiver on which the output video signal is displayed will be disturbed upon switching due to the difference of the time axis between the reproduced video signal and the input video signal.

It is one object of this invention to provide an improved VTR which overcomes the above described disadvantage.

It is another object of this invention to provide a new VTR which can selectively preview an input video signal and a reproduced video signal from a magnetic tape that is transported with a different tape speed from normal.

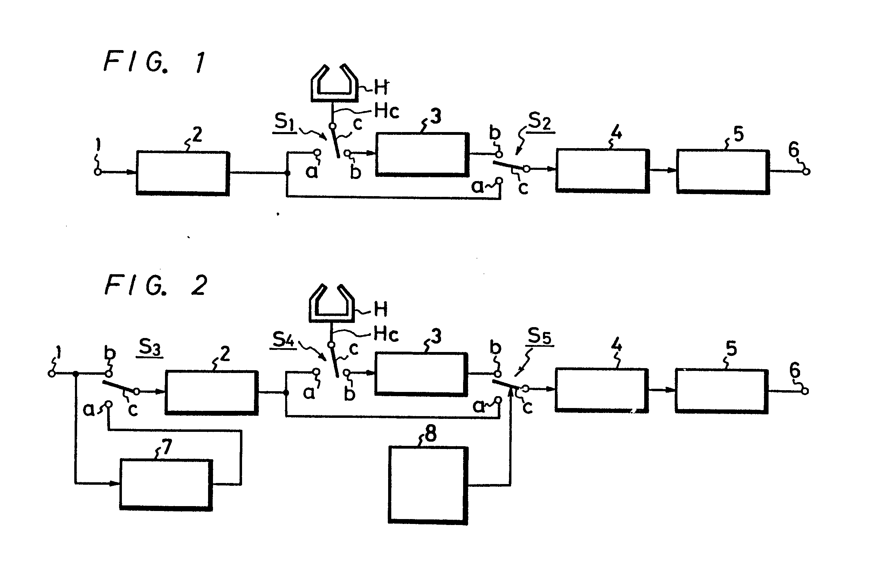

The precharacterising part of claim 1 is based upon the prior art described below with reference to Figure 1 of the accompanying drawings. US—A—4195317 discloses an apparatus corresponding to the precharacterising part of claim 1, except that it provides for recording on, and reproduction from, a magnetic disk rather than a magnetic tape. It shows a time base corrector similar in function to the TBC5 in Figure 1. As will become apparent from the description given below, there is a problem with switching between an input video signal and the reproduced signal even when such a corrector is provided.

In accordance with one aspect of this invention there is provided apparatus for reproducing a video signal which is recorded on a recording tape, said apparatus comprising: switching means for selectively supplying a reproducing video signal from said recording tape and an input video signal; characterised by said apparatus being adapted to take into account said recording tape being transported at a different tape speed from that at which it was recorded by including means connected prior to said switching means for controlling the time axis of said input video signal so as substantially to coincide with that of the reproduced video signal.

The present invention will become apparent from the following description taken in conjunction with the accompanying drawings through which the like references designate the same elements and parts.

Figure 1 shows a circuit block diagram of a conventional VTR;

Figure 2 shows a circuit block diagram of one embodiment of the VTR according to this invention;

Figure 3 shows a circuit block diagram of a control circuit which is used in the VTR shown in Figure 2; and

Figures 4A to 4D respectively show waveform diagrams which are used for the explanation of the circuit of Figure 3.

In order to facilitate the understanding of the present invention, an example of the prior art VTR (video tape recorder) will be described first.

Fig. 1 is a block diagram showing the main part of a prior art VTR as described above in which an input video signal and a video signal reproduced from a magnetic tape are alternately changed over at every field, reproduced and compared with each other so as to be previewed on the picture screen of a monitor television receiver. In this prior art VTR, an input video signal in, for example, the NTSC (national television standard committee) system format is applied to an input terminal 1 and then suppled to a frequency modulator 2. Reference letter H designates a record-and reproduce-rotary magnetic head and coil Hc thereof is connected to a movable contact $c$ of a change-over switch S1 having fixed contacts $a$ and $b$. One fixed contact $a$ of the change-over switch S1 is connected to the output terminal of the frequency modulator 2, while the other fixed contact $b$ is connected to the input terminal of an equalizer 3. Reference numeral S2 designates another change-over switch which comprises fixed contacts $a$ and $b$ and a movable contact $c$ similarly. One fixed contact $a$ of the change-over switch S2 is connected to the output terminal of the frequency modulator 2, while the other fixed contact $b$ is connected to the output terminal of the equalizer 3. The movable contact $c$ thereof is connected to the input terminal of a frequency demodulator 4. Then, the output of the frequency demodulator 4 is supplied to a time base corrector 5 and the output from the time base corrector 5 is delivered to an output terminal 6, which then is fed to a monitor television receiver (not shown).

The operation of such prior art VTR will be described hereinafter.

When the input video signal is recorded, the movable contact $c$ of the change-over switch S1 is changed in position to the fixed contact $a$ thereof. Then, the input video signal from the input terminal 1 is supplied to and frequency modulated by the frequency modulator 2. Thereafter, this video signal is supplied through the change-over switch S1 to the rotary magnetic head H and thereby recorded on a magnetic tape (not shown) which is moved at a normal tape speed.

When the input video signal and the reproduced video signal played back from the magnetic tape running at the normal tape speed are alternately changed over, compared with each other and then previewed, the movable contact $c$ of the change-over switch S1 is changed in position to the fixed contact $b$ thereof. Then, if the movable contact $c$ of the change-over switch S2 is selectively changed in position to the fixed contacts $a$ and $b$ at every field, the input video signal from the input terminal 1 and the reproduced video signal played back from the magnetic tape by the rotary magnetic head H are alternately changed over at each field and then supplied to the frequency demodulator 4 thereby frequency-demodulated. Further, the frequency-demodulated video signal is fed to the time base corrector 5 in which the time axis fluctuation of the reproduced video signal is corrected and then the input video signal and the reproduced video signal are fed to the output terminal 6. Thus, the input video signal and the reproduced signal of the video signal recorded on the magnetic tape can be previewed on the picture screen of the monitor television receiver at every field. This is advantageous for so-called electronic editing.

However, if the tape speed upon reproducing the video signal is different from the tape speed upon recording mode, the time axis of the input video signal differs considerably from that of the reproduced video signal. Consequently, even if the both signals are supplied to the time base corrector 5, when these signals are changed over and supplied to the monitor television receiver as the standard video signal, the reproduced picture is disturbed upon switching, so that it is impossible to compare to preview both the signals on the picture screen of the monitor television receiver.

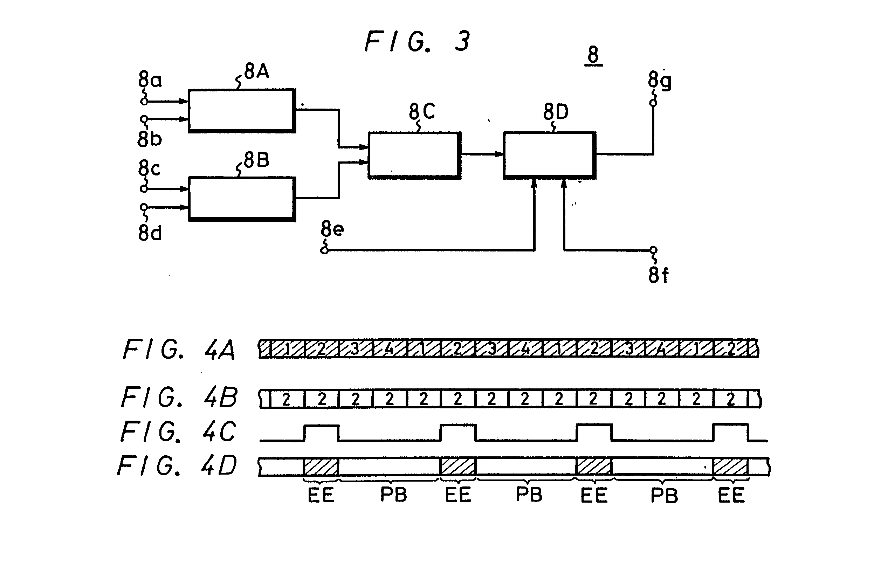

Now, an embodiment of the VTR according to this invention will hereinafter be described with reference to Figs. 2 and 3. In Fig. 2, like parts corresponding to those in Fig. 1 are marked with the same references and will not be described in detail.

In the example shown in Fig. 2, an input video signal (a color video signal of, for example, NTSC system) applied to the input terminal 1 is supplied to a fixed contact $b$ of a change-over switch S3 having another fixed contact $a$ and a movable contact $c$ and the input terminal of a time axis converting circuit 7. This time axis converting circuit 7 is formed of an RAM (random access memory) so as to be capable of varying the frequency of a read clock pulse signal to be in a predetermined ratio relative to a write clock pulse signal, and the ratio of the frequencies can properly be varied in accordance with the ratio between the tape speed of the magnetic tape upon recording mode and that of the playback mode and the running direction of the magnetic tape with respect to the rotation direction of the rotary magnetic head.

The input video signal, having had its time axis converted by the time axis converting circuit 7 is supplied to the other fixed contact $a$ of the change-over switch S3. The movable contact $c$ of the change-over switch S3 is connected to the input terminal of the frequency modulator 2, while the output terminal of the frequency modulator 2 is connected to a fixed contact $a$ of a change-over switch S4 having another fixed contact $a$ and a movable contact $c$ and to a fixed contact $a$ of a change-over switch S5 having another fixed contact $b$ and a movable contact $c$. The movable contact $c$ of the change-over switch S4 is connected to the coil Hc of the record and reproduce rotary magnetic head H. The other fixed contact $b$ of the change-over switch S4 is connected to the input terminal of the equalizer 3, while the output terminal of the equalizer 3 is connected to the fixed contact $b$ of the change-over switch S5. The output terminal of the frequency modulator 2 is connected to the other fixed contact $a$ of the change-over switch S5. The movable contact $c$ of the change-over switch S5 is connected to the input terminal of the frequency demodulator 4. The output terminal of the frequency demodulator 4 is connected to the input terminal of the time base corrector 5 and the output terminal 6 is led out from the output side of the time base corrector 5.

Reference numeral 8 designates a control circuit for controlling the changing over condition of the change-over switch S5 and the practical circuitry of this control circuit 8 will be described with reference to Fig. 3.

In Fig. 3, reference numerals 8A and 8B respectively designate counters for counting color framings 1 to 4 of the input video signal and the reproduced video signal. The counter 8A is supplied with a vertical synchronizing signal and a color framing pulse of the input video signal from input terminals 8a and 8b. A playback control signal and a playback color framing pulse are respectively supplied to input terminals 8c and 8d of the counter 8B. The outputs of both the counters 8A and 8B are supplied to an input and playback color framing detecting circuit 8C which judges which field of the respective fields 1 to 4 of the input video signal as shown in Fig. 4A should be changed over by the field interval (in this case, the second field) of a field still playback video signal as, for example, shown in Fig. 4B. The output of the detecting circuit 8C is supplied to a counter 8D. From an input terminal 8e, this counter 8D is supplied with a switch control signal which is used to switch or change-over an input video signal (EE) mode (mode to derive the input video signal only) and a playback video signal mode (mode to switch the input video signal and the reproduced video signal). From an input terminal 8f, the counter 8D is supplied with a control signal which controls a multiple (1, 2, 3, ...) in the case where the input video signal is inserted into the reproduced video signal at every predetermined number of 4 field intervals. As a result, derived from an output terminal 8g, which is taken out from the output side of the counter 8, is a control signal as shown in Fig. 4C which controls the change-over switch S5. In the example of this switch control signal, at every 4 field intervals, the second field of the reproduced video signal is changed over by the second field of the input video signal. Fig. 4D illustrates a waveform of the output video signal which is developed at the output terminal 6 (Fig.2). From Fig. 4D, it is clear that the reproduced video signal is obtained at the first, third and fourth fields, while the input video signal is obtained at the second field.

Referring back to Fig. 2, the operation of the VTR of this invention will be described. When the input video signal is recorded, the movable contact $c$ of the change-over switch S3 is changed in position to the fixed contact $b$ and the movable contact $c$ of the change-over switch S4 is changed in position to the fixed contact $a$. Then, the input video signal from the input terminal 1 is supplied to the frequency modulator 2 thereby to be frequency-modulated and then supplied through the change-over switch S4 to the rotary magnetic head H. Thus, the input video signal is recorded on the magnetic tape (not shown) which is kept still so as to form a recorded pattern the same as that of the magnetic tape which is transported at the normal tape speed.

When the input video signal and the video signal reproduced from the magnetic tape which is in the stop mode are alternately changed over at every field, compared with each other and then reproduced (accordingly, in this case, the video signal recorded on the tape moving at tape speed different from that of the recording mode is substantially reproduced), the movable contact $c$ of the change-over switch S3 is changed in position to the fixed contact $a$ and the movable contact $c$ of the change-over switch S4 is changed in position to the fixed contact $b$. Accordingly, even when the video signal recorded on the magnetic tape running at the normal tape speed is reproduced in the still playback mode, it becomes the same as the input video signal. When the movable contact $c$ of the change-over switch S5 is changed in position to the fixed contacts $a$ and $b$ thereof at every field by the control circuit 8 as mentioned above, the input video signal from the input terminal 1 and the video signal reproduced from the magnetic tape by the rotary magnetic head H appear at the movable contact $c$ of the change-over switch S5, being alternately changed over at every field as shown in Fig. 4D. Then, the input video signal and the reproduced video signal are supplied to the frequency-demodulated by the frequency demodulator 4 and the reproduced video signal is supplied to the time base corrector 5 in which the time axis fluctuation of the reproduced video signal is corrected, and thus the selected fields of the input video signal and the reproduced video signal are developed at the output terminal 6. As a result, the input video signal and the reproduced video signal of the video signal recorded on the magnetic tape can be compared with each other or previewed on the picture screen of the monitor television receiver. This is advantageous for the electronic editing.

If the movable contact $c$ of the change-over switch S5 is fixedly connected to the contact $a$ thereof by the control circuit 8, only the input video signal can be supplied to the monitor television receiver.

When the movable contact $c$ of the change-over switch S3 is changed in position to the fixed contact $b$ thereof, similarly to Fig. 1, the video signal recorded on the magnetic tape running at the normal tape speed can be played back from the magnetic tape running at the normal tape speed and the reproduced video signal and the input video signal can be changed over at every field.

While in the above example, the present invention is applied to a VTR which records and reproduces an NTSC system video signal, this invention can also be applied to a VTR which records and reproduces video signals of the PAL (phase alteration line), a PAL-M (phase alteration line-modified) and the like systems.

While this embodiment concerns with the case of the field still playback mode, the present invention can also be applied to a playback mode with a different tape speed such as a frame still playback mode, a slow motion playback mode, a high speed playback mode and so on.

When the video signal is a black and white signal, while holding a mutuality of the odd and even fields, it is sufficient to switch the input video signal and the reproduced video signal; ie, color framing is not required.

**Claims**

1. Apparatus for reproduccng a video signal which is recorded on a recording tape, said apparatus comprising:
    switching means (S5) for selectively supplying a reproducing video signal from said recording tape and an input video signal; characterised by said apparatus being adapted to take into account said recording tape being transported at a different tape speed from that at which it was recorded by including means (7) connected prior to said switching means (S5) for controlling the time axis of said input video signal so as substantially to coincide with that of the reproduced video signal.

2. Apparatus according to claim 1, in which said controlling means (7) comprises a random access memory into which said input video signal is written in accordance with a standard clock signal, and from which said input video signal is read out in accordance with a reading clock signal having a frequency which is determined by a ratio of a recording tape speed to a reproducing tape speed and a tape running direction with respect to a tape rotating direction.

3. Apparatus according to claim 1 or 2, further comprising means (2) connected between said controlling means (7) and said switching means (S5) for frequency-modulating said input video signal.

4. Apparatus according to claim 3, further comprising means (4) connected with said switching means (S5) for frequency-demodulating said reproduced video signal and said input video signal from said frequency-modulating means (2).

5. Apparatus according to claim 4, further comprising means (8) for generating a switch control signal to actuate said switching means (S5).

6. Apparatus according to claim 5, in which said generating means (8) comprises first counter means (8A) for detecting a field number of said input video signal, second counter means (8B) for detecting a field number of said reproduced video signal and means (8C, 8D) for detecting a coincidence of said field numbers of said input and reproduced video signals and producing said switch control signal upon detection of the coincidence.

7. Apparatus according to any one of the preceding claims wherein a time base corrector (5) is provided, to connect the time base of video signals from the switching means (S5).

**Patentansprüche**

1. Gerät zur Wiedergabe eines auf einem Aufnahmeband aufgezeichneten Videosignals;

mit Schaltmitteln (S5) zum wahlweisen Weiterleiten entweder eines von dem Aufnahmeband wiedergegebenen Videosignals oder eines Eingangs-Videosignals, dadurch gekennzeichnet, daß das Gerät so ausgebildet ist, daß es berücksichtigt, wenn das Aufnahmeband mit einer von Aufnahmegeschwindigkeit ·abweichenden Geschwindigkeit transportiert wird, indem es vor den genannten Shaltmitteln (S5) angeordnete Steuermittel (7) aufweist, die die Zeitachse des Eingangs-Videosignals derart steuern, daß sie im wesentlichen mit derjenigen des von dem Aufnahmeband wiedergegebenen Videosignals übereinstimmt.

2. Gerät nach Anspruch 1, bei dem die Steuermittel (7) einen Speicher mit wahlfreiem Zugriff enthalten, in den das Eingangs-Videosignal mit einem Standard-Taktsignal eingeschrieben wird und aus dem es nach Maßgabe eines Auslese-Taktsignals ausgelesen wird, dessen Frequenz bestimmt ist durch das Verhältnis zwischen der Bandgeschwindigkeit bei der Aufzeichnung und der Bandgeschwindigkeit bei der Wiedergabe und einer Laufrichtung des Bandes relativ zu der Drehrichtung des Bandes.

3. Gerät nach Anspruch 1 oder 2, bei dem ferner zwischen den genannten Steuermitteln (7) und den Schaltmitteln (S5) Mittel (2) zur Frequenzmodulation des Eingangs- Videosignals angeordnet sind.

4. Gerät nach Anspruch 3, bei dem ferner mit den genannten Schaltmitteln (S5) Mittel (4) zur Frequenz-Demodulation des wiedergegebenen Videosignals und des von den Mitteln (2) zur Frequenzmodulation kommenden Eingangs-Videosignals vorgesehen sind.

5. Gerät nach Anspruch 4, bei dem Mittel (8) zur Erzeugung eines Schaltersteuersignals für die Betätigung der Schaltmittel (S5) vorgesehen sind.

6. Gerät nach Anspruch 5, bei dem die Mittel (8) zur Erzeugung des Schaltersteuersignals folgende Teile umfassen:

einen ersten Zähler (8A) zum Erfassen der Halbbildnummer des Eingangs-Videosignals,

einen zweiten Zähler (8B) zum Erfassen der Halbbildnummer des wiedergegebenen Videosignals und

Mittel (8C, 8D) zum Feststellen der Koinzidenz der Halbbildnummern des Eingangs-Videosignals und des wiedergegebenen Videosignals und zum Erzeugen des Schaltersteuersignals, wenn eine solche Koinzidenz festgestellt wird.

7. Gerät nach einem der vorhergehenden Ansprüche, bei dem eine Einrichtung (5) zur Korrektur der Zeitbasis der von den Schaltmitteln (S5) kommenden Videosignale vorgesehen ist.

**Revendications**

1. Appareil de reproduction d'un signal vidéo qui est enregistré sur une bande d'enregistrement, ledit appareil comportant:

un dispositif de commutation (S5) destiné à fournir sélectivement un signal vidéo reproduit à partir ds ladite bande d'enregistrement et un signal vidéo d'entrée; caractérisé en ce que ledit appareil est agencé pour tenir compte de ladite bande d'enregistrement entraînée à une vitesse de bande différente de celle à laquelle elle a été enregistrée, grâce au fait qu'il comporte un dispositif (7) connecté avant le dispositif de commutation (S5) pour commander l'axe des temps dudit signal vidéo d'entrée de manière qu'il coïncide pratiquement avec celui du signal vidéo reproduit.

2. Appareil selon la revendication 1, dans lequel ledit dispositif de commande (7) contient une mémoire à accès direct dans laquelle ledit signal vidéo d'éntrée est écrit en fonction d'un signal d'horloge standard et à partir de laquelle ledit signal vidéo d'entrée est lu en fonction d'un signal d'horloge de lecture ayant une fréquence qui est déterminée par le rapport de la vitesse de la bande à l'enregistrement et la vitesse de la bande à la reproduction et une sens de déroulement de la bande par rapport au sens de rotation de la bande.

3. Appareil selon la revendication 1 ou 2, comportant en outre un dispositif (2) connecté entre ledit dispositif de commande (7) et ledit dispositif de commutation (S5) pour moduler en fréquence ledit signal vidéo d'entrée.

4. Appareil selon la revendication 3, comportant en outre un dispositif (4) connecté audit dispositif de commutation (S5) pour démoduler en fréquence ledit signal vidéo reproduit et ledit signal vidéo d'entrée provenant dudit dispositif de modulation de fréquence (2).

5. Appareil selon la revendication 4, comportant en outre un dispositif (8) produisant un signal de commande de commutation pour actionner ledit dispositif de commutation (S5).

6. Appareil selon la revendication 5, dans lequel ledit dispositif générateur (8) comporte un premier dispositif compteur (8A) destiné à détecter un nombre de trames dudit signal vidéo d'entrée, un second dispositif compteur (8B) destiné à détecter un nombre de trames du signal vidéo reproduit et un dispositif (8C, 8D) destiné à détecteur une coïncidence desdits nombres de trames desdites signaux vidéo d'entrée et reproduits et produisant ledit signal de commande de commutation à la détection de la coïncidence.

7. Appareil selon l'une quelconque des revendications précédentes, dans lequel un correcteur de base de temps (5) est prévu pour connecter la base de temps des signaux vidéo provenant du dispositif de commutation (S5).

FIG. 1

FIG. 2

EP 0 151 538 B1

EP 0 151 538 B1

## F I G. 3

8a
8A
8b

8c
8B
8d

8C

8D
8

8g

8e

8f

F I G. 4A

F I G. 4B

F I G. 4C

F I G. 4D

EE  PB  EE  PB  EE  PB  EE